# EUROPEAN PATENT SPECIFICATION

(11) **EP 3 457 847 B1**
(45) Date of publication and mention of the grant of the patent: **10.05.2023**
(21) Application number: 17731054.7
(22) Date of filing: 18.05.2017
(51) Int. Cl.: A01N 31/02, A01N 49/00, A01P 7/04

(54) **A LICE KILLING AGENT**
MITTEL ZUM TÖTEN VON LÄUSEN
AGENT ANTI-POUX

(30) Priority: 19.05.2016 CZ 20160297; 18.04.2017 CZ 20170210
(43) Date of publication of application: 27.03.2019
(73) Proprietor: Vakos XT A.S., 186 00 Praha 8 (CZ)
(72) Inventor: VECERNIK, Josef, 468 21 Pencin (CZ); DOLEZAL, Bohuslav, 149 00 Praha 4 (CZ); DOLEZAL, Jan, 149 00 Praha 4 (CZ); LEHMERT, Karel, 148 00 Praha 4 (CZ); BEHENSKA, Eva, 149 00 Praha 4 (CZ)
(74) Representative: Jirotkova, Ivana
(86) International application number: PCT/CZ2017/000039
(87) International publication number: WO 2017/198241

(56) References cited:
- EP-A1- 0 392 806
- EP-A1- 0 495 684
- WO-A1-00/56346
- WO-A1-01/89503
- WO-A1-02/100175
- WO-A1-2009/127830
- GB-A- 497 263
- GB-A- 1 572 598
- US-A- 4 533 544
- MICHAEL J FEVOLA: "Glycerin", COSMETICS & TOILETRIES, ALLURED PUBLISHING CORP, US, vol. 126, no. 8, 1 August 2011 (2011-08-01), pages 548-551, XP009154111, ISSN: 0361-4387

## Description

### Technical Field

The invention generally relates to an anhydrous and hydrophilic agent for use in killing lice especially the head louse (Pediculus capitis) based on anhydrous glycerol.

It further preferably relates to an agent comprising a mixture of this anhydrous and hydrophilic agent and natural biocide(s) and repellent(s).

### State of the Art

Worldwide occurence of lice has not even been virtually affected by the massive use of highly efficient insecticides. However, in the course of years, a number of insecticides have had to be excluded from use for toxicological reasons. Toxicologically suitable insecticides have gradually proved to lack functionality due to resistance of lice to these substances. At present, no therapeutical preparation is registered that would contain a synthetic insecticide as the active ingredient. Natural substances as aromatic oils and essences are reported as substances having moderate insecticidal or enzymatic effects and these characteristics are the reason for their use in cosmetic preparations with a so-called secondary anti-parasitic effect. However, the number of clinical studies on these natural substances the effect of which consists in blocking of the vital functions of lice is very limited. Practical application of preparations based on natural substances is very frequently problematic and their intensive application in the population of children also causes increasing resistance of lice.

Currently, the following methods are used for killing lice:
Asphyxia (choking): Alternative so-called medical agents with physical or physicochemical effects with minimal risks of the development of resistance are recommended for killing lice. Medical agents with physical effects are formulated with the objective to cause asphyxia in lice and their development stages. Kerosene was used to cause asphyxia, being later replaced with agents based on highly hydrophobic oils of the synthetic or natural origin as are e.g. Dimethicon silicone oils or vegetable and animal oils. However, agents that are exclusively made of oils are not comfortable and are difficult to remove from hair. Agents where hydrophobic oils are emulsified in aqueous solutions together with organic surfactants, alcohols, glycols (among other things with glycerol as well), aromatic, preserving and shampooing substances are substantially more practical. However, the emulsification treatment of oil with water reduces the effect of the oil on lice and the application time of the preparation is extended up to 12 hours while it must be applied repeatedly. Hydrophobic oils are also diluted with hydrophilic diluents based on anhydrous alcohols, glycols as well as glycerol together with surfactants, the active ingredient being always oil or natural oil essences.

A relatively new approach in this field consists in the use of nanoparticles of silicon dioxide that are dispersed in the hydrophilic environment of an aqueous solution of glycols, alcohols, glycerol, surfactants and polymeric substances. Silicon dioxide nanoparticles are reported to be an active ingredient for inducing asphyxia in lice. However, the comparative in vitro test in accordance with this invention does not make it possible to estimate the impact of the preparation on the quality of hair and skin.

Chemical eradication: Most preparations using the principle of asphyxia exhibit poor results concerning eradication of nits and therefore substances are used that chemically prevent the development of nits or cause their destruction. These are substances of the enzymatic character that block the production of chitin of the nit frames or simple organic acids (acetic or formic acid), which should dissolve chitin. However, the disclosed concentrations of the acids are very low for the given purpose or so high that their use would be drastic.

Dehydration: An elevated temperature and low relative humidity of the air is a generally known and very efficient physical method of louse eradication. The above mentioned principle of physical dehydration has been patented many times in the form of various thermal combs. However, the degree of chemical treatment of hair will have its limits, mainly in the area of the skin at the hair follicles. Dehydration as a method of removing hair parasites has also been proposed with the use of powders of anhydrous substances that strongly absorb water. The dehydration effect on lice is probably also achieved with alcohol. Generally, the possibilities of using pure ethanol are mentioned, applied with a soaking or combing method. However, the use of pure alcohol is not recommended from the dermatological and fire-protection point of view. Therefore, patented preparations are formulated as alcoholised gels. A current problem in the field of eradication of lice consists in high requirements for the active ingredients of the preparations for their killing. Active ingredients are subject to approval by responsible authorities and one of the conditions of their use is that they must be included in the category of substances that are usable in pharmacy (referred to as PhEur). Document WO 00/56346, (published on 28 September 2000) discloses a composition of matter comprising a topically applicable stable oil-in-glycerin emulsion containing at least one oil, at least one emulsifier and glycerin.

### Summary of the invention

This condition is met and the above mentioned drawbacks are eliminated or significantly limited by a lice killing agent in accordance with this invention the principle of which is that the agent does not contain water, is hydrophilic and its effect is guaranteed by anhydrous glycerol.

This means that the object of the invention is a lice killing agent that comprises up to 100% wt. of anhydrous glycerol.

The anhydrous glycerol is 1,2,2-propanetriol in the pharmaceutical (PhEur) or cosmetic (INCI) grade with the maximum content of 1% wt. of water, based on glycerol.

A subject matter of the invention is an agent for use in killing lice, characterized in that it comprises up to 100% wt. of anhydrous glycerol, wherein the anhydrous glycerol has a maximum content of 1% wt. water based on glycerol.

The agent in accordance with this invention preferably comprises from 98.5 to 99.95% wt. of anhydrous glycerol and from 0.05 to 1.5% wt. of at least one substance with biocidal or repellent effects.

The substance with biocidal and/or repellent effects is preferably a monoterpenic alkanol, more preferably a plant extract with biocidal and repellent effects, e.g. geraniol or citronellol, pure or in a mixture.

But biocidal and repellent substances as e.g. terpinol, rhodinol or nerol etc., or their mixtures can be used as well.

The advantage of using glycerol and a plant extract with biocidal and repellent effects, e.g. geraniol or citronellol in the agent as the active ingredients is indisputable according to the invention because glycerol has a global status of a non-toxic substance without any influence on human health and the plant extracts with biocidal and repellent effects as geraniol or citronellol, are also friendly to human health.

The agent may further, according to the invention, comprise substances adjusting the viscosity and surface tension of the agent. The total content of the additives can be from 0 to 40% wt., based on the total weight of the agent, and these substances must not introduce water into the agent.

The viscosity of the agent can be adjusted as necessary preferably with anhydrous ethanol, propanol, butanol, their isomers and/or their mutual mixture, the substances exhibiting the PhEur quality and being used in the quantity from 15 to 35% wt., preferably from 20 to 30% wt. based on the total weight of the agent.

The most preferable additive for viscosity adjustment is 2-propanol.

The surface tension of the agent can be reduced with a suitable surfactant that is well soluble in the agent and shows the pharmaceutical (PhEur) or cosmetic (INCI) quality, e.g. glucosides, polysorbates, polyoxyethylene derivatives, fatty alcohols and others, in a quantity from 0 to 5% wt., based on the total weight of the agent; preferably, this additive according to the invention is selected from the group comprising glucosides, polysorbates and/or polyoxyethylene derivatives of fatty alcohols, more preferably it is anhydrous 2-propanol, decyl glucoside and/or polyoxyethylene (20) sorbitan monolaurate.

According to the invention, the agent preferably comprises up to 33.5% wt. of an additive for viscosity adjustment, up to 5% wt. of an additive for adjustment of the surface tension of the agent, up to 1.5% wt. of at least one substance with biocidal and repellent effects, the rest to 100% wt. is anhydrous glycerol, all components are based on the total weight of the agent.

Anhydrous glycerol in the PhEur quality can be applied on all parts of the human body surface, incl. mucous membranes, geraniol or citronellol can also be applied on the skin without any negative impact in a diluted state. The fatal effect of the agent on lice in accordance with this invention is derived from the physicochemical characteristics of anhydrous glycerol (1,2,3 propanetriol, CAS register 56-81-5) and is reinforced by the biocidal effect of the plant extracts geraniol (CAS 106-24-1) and/or citronellol (CAS 106-22-9). Anhydrous glycerol is a hydrophilic liquid having high viscosity (1.49 Pa.s) and the boiling point of 290 °C with a strong dehydration effect on its environment. The relative humidity over anhydrous glycerol is zero. Anhydrous glycerol usually wets well and interacts with skin keratin in such a way that water of the protein structure of keratin is replaced with glycerol, which eliminates the protection function of keratin and subsequently enables dehydration of subcutaneous cells. The said dehydration mechanism is reversible in the presence of water and achieves a degree that is proportional to the water content in glycerol. Since it is a well-known fact that the body surface of lice, the lid of the nit frame and the adhesive between the nit and the hair are made up of keratin, it was a logical step to start research of the influence of anhydrous glycerol on the vital functions of the development stages of lice with the aim to verify to what extent the said dehydration mechanism is applicable to lice. Geraniol and citronellol belong to substances with biocidal and repellent effects that reinforce the destructive function of anhydrous glycerol and in addition they virtually eliminate the return of parasites (lice) to the treated places thanks to their strong repellent effects.

The agent can further preferably contain any anhydrous substance ensuring stability of the anhydrous substance during its storage and application, as e.g. dried bentonite or powdered Aerosil.

### Examples

Laboratory in vitro tests:
Procedure: Lice obtained by delousing with a comb were immediately put on a carrier glass, the agent in accordance with this invention was dropped onto them and the moment of the loss of motility of the lice was subjectively determined with the use of a microscope. The time determined this way was defined as the time necessary to kill the lice for a particular sample of the agent.

In vivo tests:
Standard procedure: The agent in accordance with this invention is thoroughly rubbed into dry hair infested with lice, the hair is covered with an impermeable head cover and the mixture is left to act for 60 minutes. Then, the hair is washed with water and dried. The result of the delousing was monitored for 10 days while cases with zero recurrence of infestation with lice out of a sample of 10 children aged 4-14 was considered as 100% success rate of the agent.

### Example 1

Composition: Anhydrous glycerol, PhEur quality, no additives.

Result: The time necessary to kill the lice lies within the interval of 15 to 45 minutes.

### Example 2

Composition: 70% wt. of anhydrous glycerol, PhEur quality
30% wt. of anhydrous 2-propanol, PhEur quality

Result: The time necessary to kill the lice lies within the interval of 15 to 30 minutes.

### Example 3

Composition: 69% wt. of anhydrous glycerol, PhEur quality
30% wt. of anhydrous 2-propanol, PhEur quality
1% wt. of decyl glucoside, INCI quality

Result: In the said composition, the agent exhibits 100% efficiency. This result shows that the agent efficiently destroys nits as well.

### Example 4

Composition: 73% wt. of anhydrous glycerol, PhEur quality
25% wt. of anhydrous ethanol, PhEur quality
2% wt. of polyoxyethylene (20) sorbitan monolaurate

Result: In the said composition, the agent exhibits 100% efficiency against lice and nits.

### Example 5

Composition: 99.95% wt. of anhydrous glycerol, PhEur quality
0.05% wt. of geraniol, INCI quality

Result: In the said composition, the agent exhibits 100% efficiency. This result shows that the agent efficiently destroys nits as well.

### Example 6

Composition: 99.4% wt. of anhydrous glycerol, PhEur quality
0.6% wt. of geraniol (saturated solution), INCI quality

Result: In the said composition, the agent exhibits 100% efficiency. This result shows that the agent efficiently destroys nits as well.

### Example 7

Composition: 70% wt. of anhydrous glycerol, PhEur quality
29% wt. of anhydrous 2-propanol, PhEur quality
1% wt. of geraniol, INCI quality

Result: In the said composition, the agent exhibits 100% efficiency. This result shows that the agent efficiently destroys nits as well.

### Example 8

Composition: 69% wt. of anhydrous glycerol, PhEur quality
29% wt. of anhydrous 2-propanol, PhEur quality
1% wt. of geraniol, INCI quality
1% wt. of decyl glucoside, INCI quality

Result: In the said composition, the agent exhibits 100% efficiency. This result shows that the agent efficiently destroys nits as well.

### Example 9

Composition: 75% wt. of anhydrous glycerol, PhEur quality
22% wt. of anhydrous 2-propanol, PhEur quality
2% wt. of polyoxyethylene (20) sorbitan monolaurate
1% wt. of geraniol, INCI quality

Result: In the said composition, the agent exhibits 100% efficiency against lice and nits.

### Example 10

Composition: 99.4% wt. of anhydrous glycerol, PhEur quality
0.3% wt. of geraniol, INCI quality
0.3% wt. of citronellol, INCI quality

Result: In the said composition, the agent exhibits 100% efficiency. This result shows that the agent efficiently destroys nits as well.

### Example 11

Composition: 70% wt. of anhydrous glycerol, PhEur quality
29% wt. of anhydrous 2-propanol, PhEur quality
1% wt. of citronellol, INCI quality

Result: In the said composition, the agent exhibits 100% efficiency. This result shows that the agent efficiently destroys nits as well.

### Example 12

Composition: 69% wt. of anhydrous glycerol, PhEur quality
29% wt. of anhydrous 2-propanol, PhEur quality
1% wt. of citronellol, INCI quality
1% wt. of decyl glucoside, INCI quality

Result: In the said composition, the agent exhibits 100% efficiency. This result shows that the agent efficiently destroys nits as well.

### Example 13

Composition: 75% wt. of anhydrous glycerol, PhEur quality
22% wt. of anhydrous 2-propanol, PhEur quality
2% wt. of polyoxyethylene (20) sorbitan monolaurate
1% wt. of citronellol, INCI quality

Result: In the said composition, the agent exhibits 100% efficiency against lice and nits.

### Example 14

Composition: 75% wt. of anhydrous glycerol, PhEur quality
22% wt. of anhydrous 2-propanol, PhEur quality
2% wt. of polyoxyethylene (20) sorbitan monolaurate
0.5% wt. of citronellol, INCI quality
0,5% wt. of geraniol, INCI quality

Result: In the said composition, the agent exhibits 100% efficiency against lice and nits.

For a skilled person, it would not be difficult to create further modifications without variation of the basic concept of the invention and without diverging from its scope as it is protected in the claims below.

### Industrial applicability

The agent exhibits up to 100% efficiency of killing head louse from the hair and skin.

The high efficiency of the anhydrous agent on the basis of glycerol and preferably with an addition of geraniol and/or citronellol in accordance with this invention against all the development stages has been verified experimentally and in vivo. A considerable benefit of the agent in accordance with this invention is the fact that the application of the agent is comfortable, it is friendly to human health, i.e. does not irritate the skin, does not damage hair and the nit frames are easy to remove from hair.

Further, the agent in accordance with the invention is not costly and does not load the environment in any manner.

## Claims

1. An agent for therapeutic use in killing lice, **characterized in that** it comprises up to 100% wt. of anhydrous glycerol, wherein the anhydrous glycerol has a maximum content of 1 wt.% water based on glycerol.

2. The agent for therapeutic use in killing lice in accordance with claim 1, **characterized in that** it comprises from 98.5 to 99.95% wt. of anhydrous glycerol and from 0.05 to 1.5% wt. of at least one substance with biocidal or repellent effects.

3. The agent for therapeutic use in killing lice in accordance with claim 2, **characterized in that** the substance with biocidal or repellent effects is a monoterpenic alkanol.

4. The agent for therapeutic use in killing lice in accordance with claim 3, **characterized in that** the monoterpenic alkanol is a plant extract of geraniol and/or citronellol.

5. The agent for therapeutic use in killing lice in accordance with claim 1, **characterized in that** it comprises up to 33.5% wt. of an additive for viscosity adjustment, up to 5% wt. of an additive for adjustment of surface tension of the agent, up to 1.5% wt. of at least one substance with biocidal and repellent effects, the rest to 100% wt. is anhydrous glycerol, all components are based on the total weight of the agent.

6. The agent for therapeutic use in killing lice in accordance with claim 5, **characterized in that** the additive for viscosity adjustment of the agent is selected from the group comprising anhydrous ethanol, propanol, butanol, their isomers and/or their mixtures.

7. The agent for therapeutic use in killing lice in accordance with claim 6, **characterized in that** the additive for viscosity adjustment is 2-propanol.

8. The agent for therapeutic use in killing lice in accordance with claim 5, **characterized in that** the additive for adjustment of surface tension of the agent is selected from the group comprising glucosides, polysorbates and/or polyoxyethylene derivatives of fatty alcohols.

9. The agent for therapeutic use in killing lice in accordance with claim 8, **characterized in that** the additive adjusting the surface tension of the agent is anhydrous 2-propanol, decyl glucoside and/or polyoxyethylene (20) sorbitan monolaurate.

## Patentansprüche

1. Mittel zur therapeutischen Verwendung bei der Abtötung von Läusen, **dadurch gekennzeichnet, dass** es bis zu 100 Gew.-% wasserfreies Glycerin umfasst, wobei das wasserfreie Glycerin einen maximalen Gehalt von 1 Gew.-% Wasser, bezogen auf Glycerin, aufweist.

2. Mittel zur therapeutischen Verwendung bei der Abtötung von Läusen nach Anspruch 1, **dadurch gekennzeichnet, dass** es 98,5 bis 99,95 Gew.-% wasserfreies Glycerin und 0,05 bis 1,5 Gew.-% mindestens einer Substanz mit biozider oder abweisender Wirkung umfasst.

3. Mittel zur therapeutischen Verwendung bei der Abtötung von Läusen nach Anspruch 2, **dadurch gekennzeichnet, dass** die Substanz mit biozider oder abweisender Wirkung ein Monoterpenalkanol ist.

4. Mittel zur therapeutischen Verwendung bei der Abtötung von Läusen nach Anspruch 3, **dadurch gekennzeichnet, dass** das Monoterpenalkanol ein Pflanzenextrakt von Geraniol und/oder Citronellol ist.

5. Mittel zur therapeutischen Verwendung bei der Abtötung von Läusen nach Anspruch 1, **dadurch gekennzeichnet, dass** es bis zu 33,5 Gew.-% eines Zusatzstoffes zur Viskositätseinstellung, bis zu 5 Gew.-% eines Zusatzstoffes zur Einstellung der Oberflächenspannung des Mittels, bis zu 1,5 Gew.-% mindestens einer Substanz mit biozider und abweisender Wirkung, umfasst, wobei der Rest zu 100 Gew.-% wasserfreies Glycerin ist, wobei alle Komponenten auf das Gesamtgewicht des Mittels bezogen sind.

6. Mittel zur therapeutischen Verwendung bei der Abtötung von Läusen nach Anspruch 5, **dadurch gekennzeichnet, dass** der Zusatzstoff zur Viskositätseinstellung des Mittels ausgewählt ist aus der Gruppe, bestehend aus wasserfreiem Ethanol, Propanol, Butanol, deren Isomeren und/oder deren Mischungen.

7. Mittel zur therapeutischen Verwendung bei der Abtötung von Läusen nach Anspruch 6, **dadurch gekennzeichnet, dass** der Zusatzstoff zur Viskositätseinstellung 2-Propanol ist.

8. Mittel zur therapeutischen Verwendung bei der Abtötung von Läusen nach Anspruch 5, **dadurch gekennzeichnet, dass** der Zusatzstoff zur Einstellung der Oberflächenspannung des Mittels ausgewählt ist aus der Gruppe, umfassend Glucoside, Polysorbate und/oder Polyoxyethylenderivate von Fettalkoholen.

9. Mittel zur therapeutischen Verwendung bei der Abtötung von Läusen nach Anspruch 8, **dadurch gekennzeichnet, dass** der Zusatzstoff zur Einstellung der Oberflächenspannung des Mittels wasserfreies 2-Propanol, Decylglucosid und/oder Polyoxyethylen-(20)-Sorbitanmonolaurat ist.

## Revendications

1. Un agent à usage thérapeutique pour détruire les poux, **caractérisé en ce qu'**il comprend jusqu'à 100% en poids de glycérol anhydre, lequel glycérol anhydre ayant une teneur maximale en eau de 1 % en poids par rapport au poids de glycérol.

2. L'agent à usage thérapeutique pour détruire les poux selon la revendication 1, **caractérisé en ce qu'**il comprend de 98,5 à 99,95 % en poids de glycérol anhydre et de 0,05 à 1,5 % en poids d'au moins une substance ayant des effets biocides ou répulsifs.

3. L'agent à usage thérapeutique pour détruire les poux selon la revendication 2, **caractérisé en ce que** la substance ayant des effets biocides ou répulsifs est un alcanol monoterpénique.

4. L'agent à usage thérapeutique pour détruire les poux selon la revendication 3, **caractérisé en ce que** l'alcanol monoterpénique est un extrait végétal de géraniol et/ou de citronellol.

5. L'agent à usage thérapeutique pour détruire les poux selon la revendication 1, **caractérisé en ce qu'**il comprend jusqu'à 33,5 % en poids d'un additif pour le réglage de la viscosité, jusqu'à 5 % en poids d'un additif pour le réglage de la tension superficielle de l'agent, jusqu'à 1,5 % en poids d'au moins une substance ayant des effets biocides et répulsifs, le reste jusqu'à 100% en poids consistant en glycérol anhydre, tous les composants étant exprimés par rapport au poids total de l'agent.

6. L'agent à usage thérapeutique pour détruire les poux selon la revendication 5, **caractérisé en ce que** l'additif pour l'ajustement de la viscosité de l'agent est choisi dans le groupe comprenant l'éthanol anhydre, le propanol, le butanol, leurs isomères et/ou leurs mélanges.

7. L'agent à usage thérapeutique pour détruire les poux selon la revendication 6, **caractérisé en ce que** l'additif pour l'ajustement de la viscosité est le 2-propanol.

8. L'agent à usage thérapeutique pour détruire les poux selon la revendication 5, **caractérisé en ce que** l'additif pour l'ajustement de la tension superficielle de l'agent est choisi dans le groupe comprenant les glucosides, les polysorbates et/ou les dérivés polyoxyéthylèniques d'alcools gras.

9. L'agent à usage thérapeutique pour détruire les poux selon la revendication 8, **caractérisé en ce que** l'additif ajustant la tension superficielle de l'agent est le 2-propanol anhydre, le décyl glucoside et/ou le polyoxyéthylène (20) monolaurate de sorbitan.
